# EUROPÄISCHE PATENTSCHRIFT

(11) **EP 1 610 985 B1**
(45) Veröffentlichungstag und Bekanntmachung des Hinweises auf die Patenterteilung: **29.11.2006**
(21) Anmeldenummer: 04719937.7
(22) Anmeldetag: 12.03.2004
(51) Int. Cl.: B60R 21/34

(54) **VORRICHTUNG ZUM SCHUTZ VON PERSONEN BEI EINEM FRONTALAUFPRALL AUF EIN KRAFTFAHRZEUG**
PROTECTIVE DEVICE FOR PERSONS IN A CASE OF A FRONTAL IMPACT WITH A VEHICLE
DISPOSITIF DE PROTECTION DE PERSONNES EN CAS DE CHOC FRONTAL AVEC UN VEHICULE

(30) Priorität: 08.04.2003 DE 10315827
(43) Veröffentlichungstag der Anmeldung: 04.01.2006
(73) Patentinhaber: ISE Innomotive Systems Europe GmbH, 51693 Bergneustadt (DE)
(72) Erfinder: LANG, József, H-1131 Budapest (HU); MIKA, Frank, 51588 Nümbrecht (DE); REX, Martin, 51570 Windeck (DE)
(74) Vertreter: Fuchs Mehler Weiss & Fritzsche
(86) Internationale Anmeldenummer: PCT/EP2004/002587
(87) Internationale Veröffentlichungsnummer: WO 2004/089703

(56) Entgegenhaltungen:
- EP-A- 1 238 893
- DE-A- 10 108 880
- DE-A- 19 712 961

## Beschreibung

Die Erfindung bezieht sich auf eine Vorrichtung gemäß dem Oberbegriff des Anspruches 1.

Jährlich ereignen sich zahlreiche Unfälle, bei denen Fußgänger, Skater oder Zweiradfahrer, von einem Kraftfahrzeug angefahren, auf die Front-oder Motorhaube sowie gegen die Windschutzscheibe geschleudert werden, und dabei zumindest schwere Verletzungen erfahren. Dabei ist insbesondere der Kopf sowie der Oberkörper einer erwachsenen Unfallperson gefährdet, da dieser bei einem Zusammenprall mit dem Kraftfahrzeug-wie Crash-Versuche und auch die praktischen Erfahrungen gezeigt haben -, etwa im hinteren, relativ hartem Bereich an der Fronthaube am Übergang zur Windschutzscheibe aufschlägt und dabei erheblich verletzt wird.

Aufgrund von entsprechenden Forderungen arbeitet die Fahrzeugindustrie intensiv an dem Problem, den Personenschutz insoweit zu verbessern.

Es sind eine Reihe von Möglichkeiten zur Lösung dieses Problems bekannt geworden, wie ein vor der Windschutzscheibe liegendes netzartiges Auffangelement oder ein im Aufprallfall sensorgesteuert aufblasbarer Luftsack im Übergangsbereich zwischen Windschutzscheibe und Frontscheibe.

Die DE 28 14 107 A in Verbindung mit der DE 28 41 315 zeigt ein anderes Lösungsprinzip zur Verringerung der Verletzungsgefahr beim Aufprall von Personen auf die Fronthaube, das auf der Überlegung beruht, das im fahrtrichtungsabgewandten hinteren Bereich der Fronthaube liegende, relativ harte und unnachgiebige Aufschlaggebiet wesentlich zu entschärfen. Dies wird durch eine mittels eines Aufprall-Sensors betätigte Vorrichtung zur Verstellung der Fronthaube aus einer Ruheposition in eine demgegenüber angehobene, nachgiebige Aufprallposition, d.h. durch eine sogenannte "aktive Fronthaube" bewirkt. Dadurch, dass die Fronthaube bei der von dem Aufprall-Sensor erfassten Kollision mit einer Person in eine gegenüber ihrer Ruhe - d.h. Normalfallstellung angehobene Aufpralistellung nachgiebig verstellt wird, wird ein Abstand der Fronthaube zur steifen Unterstruktur des Fahrzeuges (Motor etc.), d.h. ein beim Brust- oder Kopfaufprall der Person im Sinne eines günstigeren Energieabbaues zur Wirkung kommender Deformationsweg der Fahrzeugkarosserie geschaffen, der für verringerte Kopf- und Brustverzögerungen und damit für geringere Verletzungsrisiken sorgt.

Für das "aktive" Aufstellen der Fronthaube sind eine Reihe von konstruktiven Möglichkeiten mit unterschiedlichen Antriebsarten bekannt geworden.

So zeigt die DE 197 12 961 A1 einen Aufprallschutz durch eine "aktive Fronthaube", die windschutzscheibenseitig über eine Scharnieranordnung drehbar angeschlagen ist. Diese Scharnieranordnung ist mittelbar über einen schwenkbar oder vertikal verschiebbar gelagerten Scharnierträger so an einem Stützträger der Karosserie des Vorderwagens befestigt, dass im Kollisionsfall die Fronthaube mittels einer an dem Scharnierträger angreifenden energiespeichernden Einrichtung, vorzugsweise einem Federspeicher, nach oben verschwenkt bzw. verschoben, d.h. angehoben werden kann.

Dieser bekannten Konstruktion liegt der Gedanke zugrunde, die Scharnieranordnung selbst mit dem angelenkten Scharnierträger, der quasi die Grundplatte für die Scharnieranordnung bildet, gegenüber der Karosserie aufzustellen, so dass es nicht notwendig ist, eine komplexe Entkoppeleinrichtung zwischen Scharnieranordnung und Fronthaube im Falle eines Aufpralles vorzusehen.

Dieses Konstruktionsprinzip setzt voraus, dass im Grundzustand der Scharnierträger gegen die Kraft des vorgenannten Federspeichers durch eine Verriegelungseinrichtung, sensorgesteuert lösbar, niedergehalten ist. Im bekannten Fall ist der Scharnierträger über eine sensorgesteuerte Verriegelungseinrichtung mit einem exzentrisch gelagerten Riegel arretiert. Diese Verriegelungseinrichtung ist neben dem Scharnierträger an dem Stützträger montiert, wobei der verschwenkbare Riegel im Wirkeingriff mit der hinteren Kante des Scharnierträgers steht. Im Kollisionsfall wird die Verriegelungseinrichtung durch Verschwenken des Riegels gelöst und der Scharnierträger freigegeben.
Auch ist in dieser Schrift eine Verriegelungseinrichtung mit einem elektromagnetisch betätigten Riegel im Aufstellweg des Scharnierträgers dargestellt.

Diese bekannten Verriegelungseinrichtungen mit einem einseitig wirkenden Riegel benötigen relativ hohe Entriegelungskräfte und bringen die Gefahr des Verkantens bzw. Verklemmens bei der Aufstellung des Scharnierträgers in sich.

Die DE 199 22 454 A1 beschreibt eine aufstellbare Schutzvorrichtung der vorgenannten Art mit einer Verriegelungseinrichtung der Scharnieranordnung in Form einer Klinke, ohne dass zu der Konstruktion selbst nähere Hinweise gegeben werden.

Die DE 200 13 256 U1 zeigt einen sensorgesteuerten Aufsteller für das Anheben der Motorhauben eines PKW im Gefahrunfall, bestehend aus zwei zusammengesteckten, zylindrischen, relativ zueinander verschiebbaren Gehäuseteilen, die durch ein Kugelschloss, das von einem kegelstumpfartigen Sperrelement betätigt wird, in ihrer Relativbewegung lösbar gesperrt sind. Dieser bekannte Aufsteller eignet sich nicht für das Aufstellen eines typischerweise lang gestreckt rechteckig ausgebildeten Scharnierträgers.

Auch die EP 1 238 893 A offenbart eine Vorrichtung zum Schutz von Personen gemäß Oberbegriff des Anspruch 1.

Der Erfindung liegt die Aufgabe zugrunde, ausgehend von der eingangs bezeichneten Vorrichtung zum Schutz von Personen bei einem Frontalaufprall, diese hinsichtlich der Verriegelungseinrichtung so auszubilden, dass eine sichere, schnelle und kräftearme Entriegelung gewährleistet ist.

Die Lösung dieser Aufgabe gelingt bei einer Vorrichtung zum Schutz von Personen bei einem Frontalaufprall auf ein Kraftfahrzeug, welches eine den Vorderwagen abdeckende Fronthaube aufweist, die windschutzscheibenseitig an beiden Fahrzeugseiten jeweils über eine Scharnieranordnung drehbeweglich an der Karosse des Vorderwagens angelenkt ist, bestehend jeweils aus
- einem Scharnierträger für die mittelbare karosserieseitige Anlenkung der Scharnieranordnung, der aufstellbar an der Karosse des Vorderwagens angebracht ist,
- einer an dem Scharnierträger angreifenden Federspeicher-Anordnung, und einer
- sensorgesteuerten Verriegelungseinrichtung für einen Wirkeingriff mit dem Scharnierträger, derart, dass im Normalzustand der Scharnierträger niedergehalten ist und im Kollisionsfall sensorbetätigt für eine begrenzte Aufstellbewegung freigebbar ist,
gemäß der Erfindung **dadurch, dass** die Verriegelungseinrichtung an zwei symmetrisch gegenüberliegenden Seiten des Scharnierträgers mindestens ein fingerartiges Rastelement für eine Rastverbindung mit einem fahrzeugfesten Rastsitz sowie ein zentrales Abstützelement für eine lösbare Abstützung der beiden gegenüberliegenden fingerartigen Rastelement besitzt.

Durch die erfindungsgemäße symmetrisch angeordnete RastVerriegelung mittels der fingerartigen Rastelemente, die auch als Rastbolzen bezeichnet werden können, ist eine sichere, weil verkantungsfreie, Aufstellung des länglichen Scharnierträgers gewährleistet. Das zentrale Abstützelement ermöglicht dabei eine kräftearme Entriegelung, die auch sehr schnell erfolgt, weil sie mittels der hohen Aufstellkraft der Federspeicher-Anordnung geschieht. Hinzu kommt, dass sich die Rastbolzen immer in den fahrzeugfesten Rastsitzen selbsttätig zentrieren und damit auch den Scharnierträger für eine klemm- bzw. verkantungsfreie Aufstellung zentrieren. Die Rastbolzen bewirken dabei in Verbindung mit der zentralen Abstützung eine einerseits hochbelastbare und andererseits schnell aufhebbare Halterung.

Ausgestaltungen der Erfindung sind in Unteransprüchen gekennzeichnet und ergeben sich zudem aus der Figurenbeschreibung.

Anhand von in den Zeichnungen in verschiedenen Ansichten und Zuständen dargestellten Ausführungsbeispielen wird die Erfindung näher beschrieben.

Es zeigen:
- Fig. 1: in einer isometrischen Darstellung mit halbseitig geschnittener und weggebrochener Ansicht eine Schutz-Vorrichtung mit einem bevorzugten Ausführungsbeispiel der erfindungsgemäßen Bolzen-Verriegelung in Verbindung mit einem Teleskop-Aufsteller,
- Fig. 2: in einer Längsschnitt-Darstellung mit hälftig unterschiedlichen Schnittlinien den inneren Aufbau einerseits des Teleskop-Aufstellers mit den zugehörigen Aufstellfedern und andererseits der Bolzen-Verriegelung in Verbindung mit einem zentralen Abstütz- und Auslöseelement in Form einer konischen Ringfläche und eines pyrotechnischen Aktuators,
- Fig. 3: eine Schnitt-Darstellung entsprechend Fig. 2, jedoch mit einer durchgehenden Schnittlinie, die im wesentlichen den Aufbau des Teleskop-Aufstellers und des zentralen Stütz- und Auslöseelementes zeigt,
- Fig. 4: im Figurenteil A eine Querschnittansicht der Vorrichtung nach Fig. 2 entlang der Schnittlinie C - C mit konischer Abstützfläche, und im Figurenteil B eine Ausschnitt-Vergrößerung aus Fig. 7 unter Darstellung eines schwimmend gelagerten Stützkörpers mit einem zylindrischen Stützabschnitt und konischer Einführschräge,
- Fig. 5: in einer waagrechten Längsschnitt-Darstellung de inneren Aufbau der erfindungsgemäßen Bolzen-Verriegelung nach Fig. 1 mit vier Rastbolzen und zugehörigem Gestänge, die zu dem zentralen Abstützkörper führen,
- Fig. 6: eine Ausschnitt-Vergrößerung aus Fig. 5,
- Fig. 7: in einer schematisierten Vertikal-Längsschnitt-Darstellung die Konstruktion der Bolzenverriegelung und des zentralen Abstützelementes in Form eines Kegelstumpfes in der Aufstellplatte des Teleskopaufstellers im verriegelten Grundzustand,
- Fig. 8: eine Darstellung entsprechend Fig. 7 im entriegelten Zustand,
- Fig. 9: eine Darstellung analog Fig. 7, jedoch mit einer ringförmigen konischen Abstützfläche am Kolben eines pyrotechnischen Aktuators im verriegelten Zustand,
- Fig. 10: eine Darstellung entsprechend Fig. 9 im entriegelten Zustand,
- Fig. 11: eine Darstellung entsprechend Fig. 2 im entriegelten Zustand,
- Fig. 12: den aufgestellten Zustand des Teleskop-Aufstellers,
- Fig. 13: in vier Längsschnitt-Figurenteilen A - D den Aufbau und den Entriegelungsablauf bei einer Bolzen-Entriegelung nach der Erfindung mit einem zangenförmigen, kräfteunterstützenden Zwischenglied zwischen den Rastbolzen und dem zentralen Abstützelement,
- Fig. 14: in zwei Figurenteilen A, B eine Variante der Ausführung nach Fig. 13 mit Direktanbindung der Rastbolzen an das zangenförmige Zwischenglied, und
- Fig. 15: in zwei Figurenteilen A, B den Aufbau einer Ausführungsform der Bolzenverriegelung mit einem Kniehebel als zentrales Abstützelement.

Die Figuren zeigen bevorzugte Ausführungsformen der erfindungsgemäßen Verriegelungseinrichtung bei einer speziellen Vorrichtung zum Schutz von Personen bei einem Frontalaufprall auf ein Kraftfahrzeug, welches eine den Vorderwagen abdeckende Fronthaube aufweist, die windschutzscheibenseitig an beiden Fahrzeugseiten jeweils über eine Scharnieranordnung drehbeweglich an der Karosse des Vorderwagens angelenkt ist, wobei diese Vorrichtung einen Scharnierträger für die mittelbare karrosserieseitige Anlenkung der Scharnieranordnung aufweist, der mittels einer Teleskop Anordnung sensorgesteuert aufstellbar ist. Dabei ist der Aufbau der Fronthaube und der Scharnieranordnungen der Einfachheit nicht dargestellt. Er folgt dem Aufbau nach dem Stand der Technik.

Die erfindungsgemäße Verriegelungseinrichtung kann natürlich auch bei Vorrichtungen mit anderen Aufstellkonstruktionen, z.B. linear verschiebbaren Aufstellsäulen oder Scheren-Aufstellem, angewendet werden.

Die dargestellte Vorrichtung mit einem Teleskop-Aufsteller weist ein längliches, im wesentlichen rechteckiges Gehäuse 1 mit einem angeformten Boden 1 a auf. Das Gehäuse kann auch aus einem entsprechend geformten Profilteil bestehen, an dem der Boden 1 a befestigt wird. Ein derartiges Gehäuse 1 ist jeweils an beiden Seiten des Vorderwagens im Scharnierbereich an der Karosserie (Stützträger) befestigt.

In dem Gehäuse 1 ist eine erste Teleskopstufe, gebildet durch zwei in den Enden des Gehäuses angeordnete Profile 2, 3, aufstellbar geführt gehaltert. Anschläge 1 b am Gehäuse und 2 a, 3 a an den Profilkörpern 2, 3 begrenzen den Aufstellhub der ersten Teleskopstufe.

Zwischen den beiden Profilkörpern 2, 3 ist eine zweite Teleskopstufe, gebildet durch einen Profilkörper 4, aufstellbar geführt gehaltert. Anschläge 2 b und 3 b an den Profilkörpern 2, 3 der ersten Teleskopstufe und Anschläge 4 a, 4 b am Profilkörper 4 begrenzen den Aufstellhub der zweiten Teleskopstufe.

An dem Profilkörper 4 der zweiten Teleskopstufe ist eine rechteckige Aufstellplatte 5 mittels Schrauben 6 befestigt. Im eingefahrenen Zustand der Aufstellvorrichtung bildet diese Aufstellplatte 5 praktisch einen das Gehäuse 1 abdichtenden Gehäuse-Deckel, mit einem gedämpften Spiel zur Gehäusewandung, das einen lockeren, d.h. klemmfreien, jedoch klapperfreien Sitz des Deckels gewährleistet.

Diese Aufstellplatte 5 kann unmittelbar der Scharnierträger sein, d.h. auf ihr kann unmittelbar das karosserieseitige Ende der zugehörigen Scharnieranordnung angeschlagen sein. Auf der Aufstellplatte 5 kann aber auch ein separater Scharnierträger z. B. wippenartig außermittig angelenkt sein.

Innerhalb des Profilkörpers 4 der zweiten Teleskopstufe sind zwei Federführungsbolzen 7 mittels Schrauben 8 am Gehäuseboden 1a befestigt. Sie nehmen zwei Aufstellfedern 9 geführt auf, die sich jeweils einmal am Gehäuseboden 1a und zum anderen an der Aufstellplatte 5 abstützen. Diese Aufstellfedern 9 sind im verriegelten Zustand der Vorrichtung vorgespannt und stellen nach einer Auslösung der noch zu erläuternden Verriegelung die zweite Teleskopstufe mit der Aufstellplatte 5 auf. Sie würden dabei über die Anschläge 4a, 2b und 4b, 3b auch die Profilkörper 2, 3 der ersten Teleskop-Aufstellstufe mitnehmen, jedoch besitzen in der dargestellten Ausführungsform diese Profilkörper 2, 3 zur Beschleunigung der Aufstellbewegung eigene Aufstellfedern 10, die in zugehörigen Federführungsbolzen 11, welche ebenfalls mittels Schrauben 12 am Gehäuseboden 1a befestigt sind, aufgenommen sind und sich zwischen dem Gehäuseboden 1a und der Kopfseite der Profilkörper 2, 3 vorgespannt erstrecken.

Eine derartige Teleskop-Aufstell-Vorrichtung für einen Scharnierträger ist Gegenstand der älteren Anmeldung 103 14 433.1-42 deren Offenbarung in den Gegenstand der vorliegenden Anmeldung mit einbezogen wird.

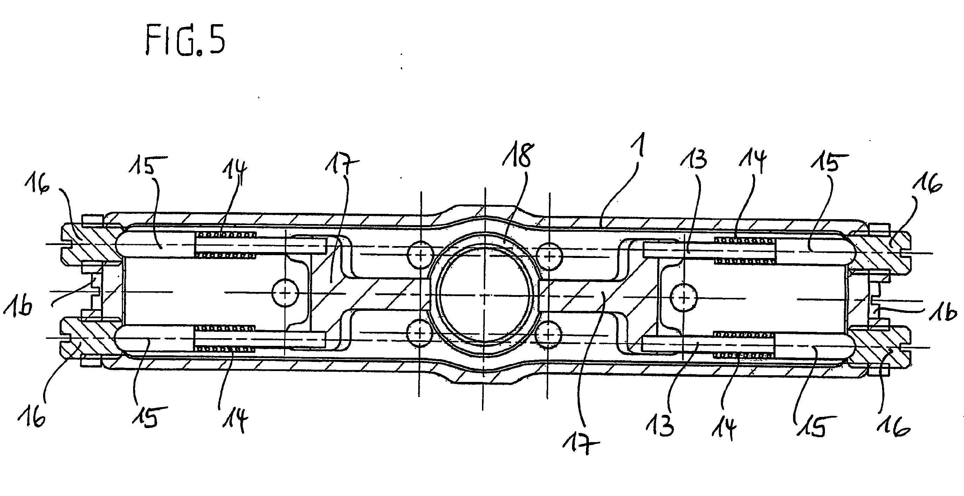

Im folgenden soll nunmehr die erfindungsgemäße sogenannte Bolzen-Verriegelungseinrichtung und das an sie angepasste sensorgesteuerte Auslöse-System beschrieben werden. In den dargestellten Ausführungsbeispielen ist die erfindungsgemäße Bolzenverriegelung in der Aufstellplatte 5 untergebracht. Sie weist, wie insbesondere die Fig. 5 zeigt, an beiden Seiten, d.h. jeweils im Winkel von 90 % zur AufstellRichtung, jeweils zwei Verriegelungsstangen 13 auf, die an den nach außen gewandten Enden jeweils einen durch eine Druckfeder 14 im ausstoßenden Sinne vorgespannten Rastbolzen 15 verschiebbar aufnehmen. Im dargestellten Ausführungsbeispiel ist die Rast-Wirkfläche der Rastbolzen 15 kugelförmig ausgebildet. Sie kann aber auch kegelförmig oder dergleichen ausgebildet sein.

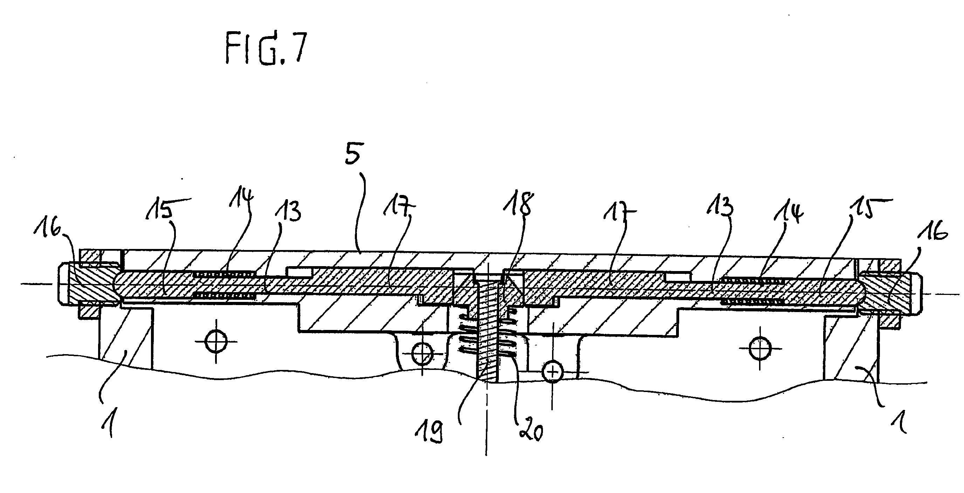

Die Rastbolzen 15 stehen in Rast-Wirkverbindung mit am Gehäuse 1 seitlich angebrachten Kugelpfannen 16, die komplementär zu der Kugelform der Rastfläche der Rastbolzen 15 ausgeformt sind. Durch die in der Aufstellplatte 5 eingebauten vorspannenden Druckfedern 14 entsteht eine form- und reibschlüssige Verbindung zwischen den Rastbolzen 15 und den zugeordneten Kugelpfannen 16. Die Kugelpfannen 16, bzw. im Fall von kegeligen Rastbolzen die Kegelpfannen, sind über eine Gewindeverbindung (Fig. 7) axial einstellbar, um auftretende Fertigungstoleranzen damit ausgleichen zu können. Dadurch ist stets ein annähernd spielfreier Sitz der Verrastung gewährleistet.

Die Vorspannung der Druckfedern 14 reicht jedoch nicht aus, um insoweit allein eine ausreichende Halterung der Aufstellplatte 5 zu erzeugen. Denn die Aufstellkraft der Aufstellfedern 9, 10 ist um ein Vielfaches größer als die Haltekraft der Bolzen-Druckfedern 14 und sie würde die Rastbolzen 15 aus den Kugelpfannen 16 drücken.

Um eine ausreichende Halterung der Aufstellplatte 5 gegen die Vorspannkraft der Aufstellfedern 9, 10 zu erzielen, werden die Verriegelungsstangen 13 durch ein zentral angebrachtes Halte(Stütz)-und Auslöseelement gegen ein Zurückschieben abgestützt und gesichert.

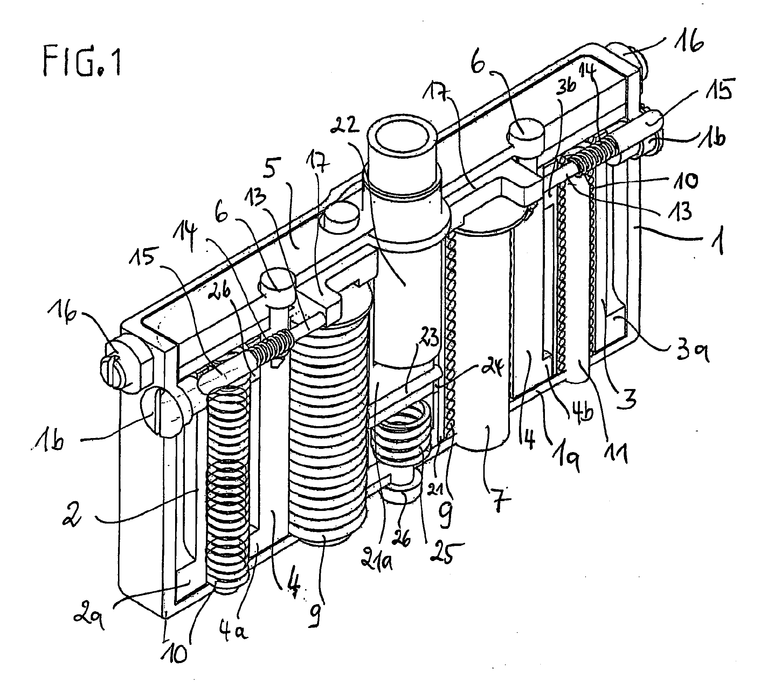

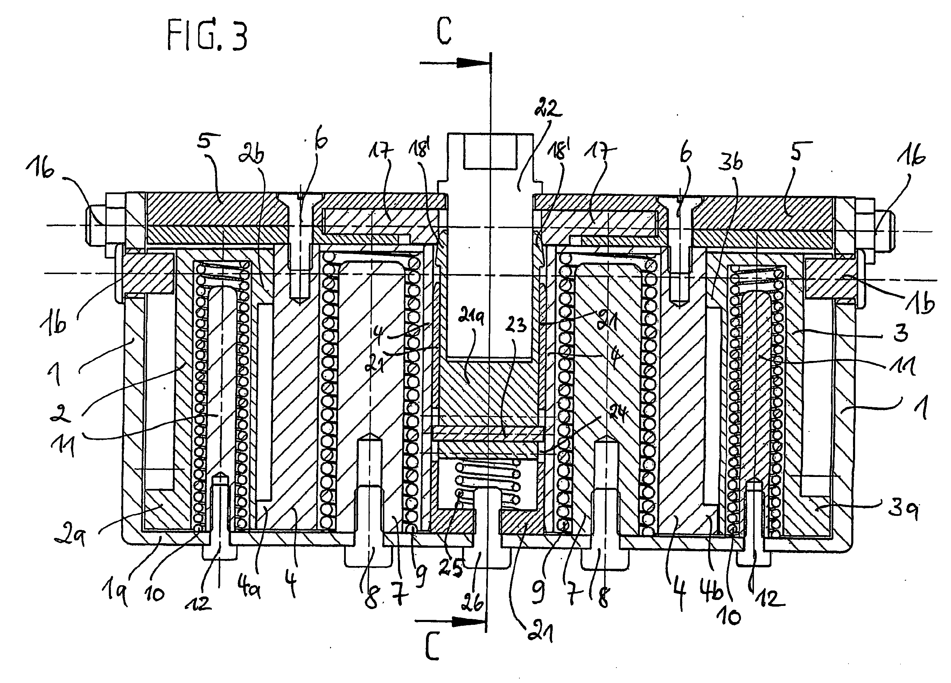

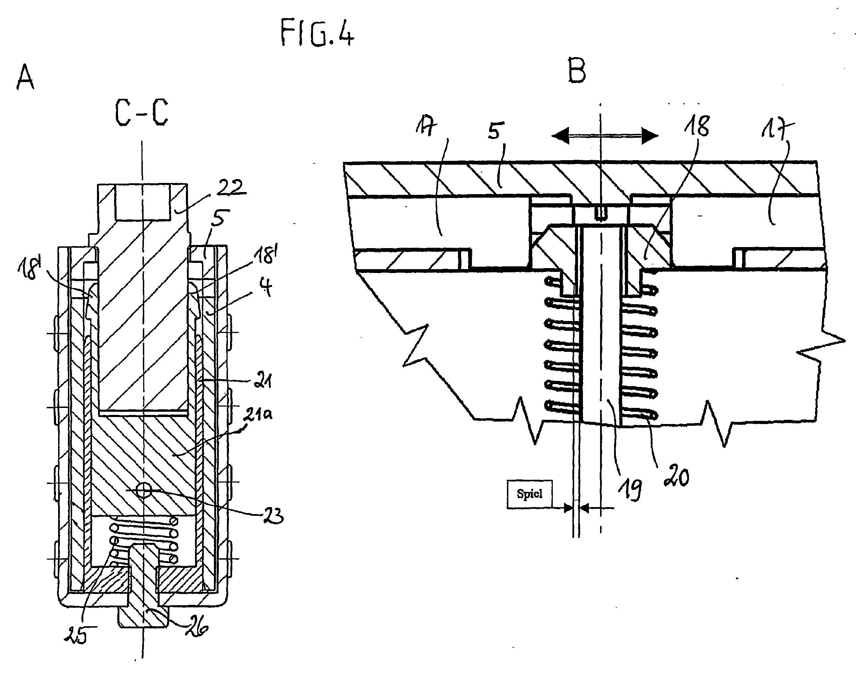

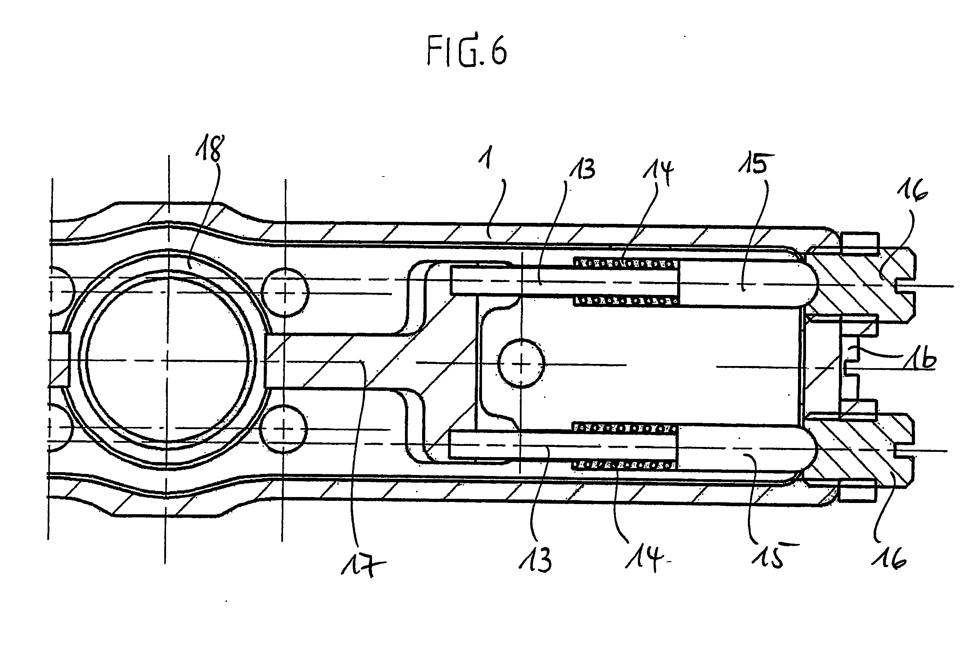

Bei der Ausführungsform nach den Figuren 1 bis 12 sind in der Aufstellplatte 5 in entsprechenden Räumen zwei plattenförmige Schieber 17 und ein zentrales, vorzugsweise eine zylinderförmige Abstützfläche und eine sich daran anschließende konische Gleitfläche aufweisendes Abstützelement 18 vorgesehen. Für die Realisierung dieses Stützelementes 18 sind eine Reihe von Möglichkeiten gegeben. Die Figuren 4B und 7, 8 zeigen zur prinzipiellen Darstellung der Abstützung ein kegelstumpfartiges Stützelement 18 mit einer zylindrischen Abstützfläche, das in der Aufstellplatte 5 von einer zentralen Stange 19 geführt aufgenommen ist (Fig. 7). Die einen Enden der Schieber 17 stehen jeweils auf Anschlag mit den freien Enden von zwei Verriegelungsstangen 13 (Fig. 1), während sich das andere Ende der Schieber 17 in der Grundstellung an der bundförmigen Fläche des zentralen Abstützelementes 18 abstützt, das durch eine Druckfeder 20 (Fig. 7) in Aufstellrichtung vorgespannt ist. Durch das Abstützelement 18 wird verhindert, dass in der Grundstellung die Verriegelungsstangen 13 und damit auch die Rastbolzen 15 aus der Verriegelungsstellung nach innen unter Aufhebung der Verriegelung durch die Vorspannkraft der Aufstellfedern 9, 10 zurückgeschoben werden.

Das kegelstumpfartige Abstützelement 18 ist, wie die Fig. 4B zeigt, vorzugsweise schwimmend auf der Stange 19 mit dem angedeuteten Spiel gelagert. Dadurch können die auf das Abstützelement 18 wirkenden Querkräfte von der noch zu beschreibenden Auslöseeinheit eliminiert werden, d.h. können die Auslösung der Halterung nicht negativ beeinträchtigen.

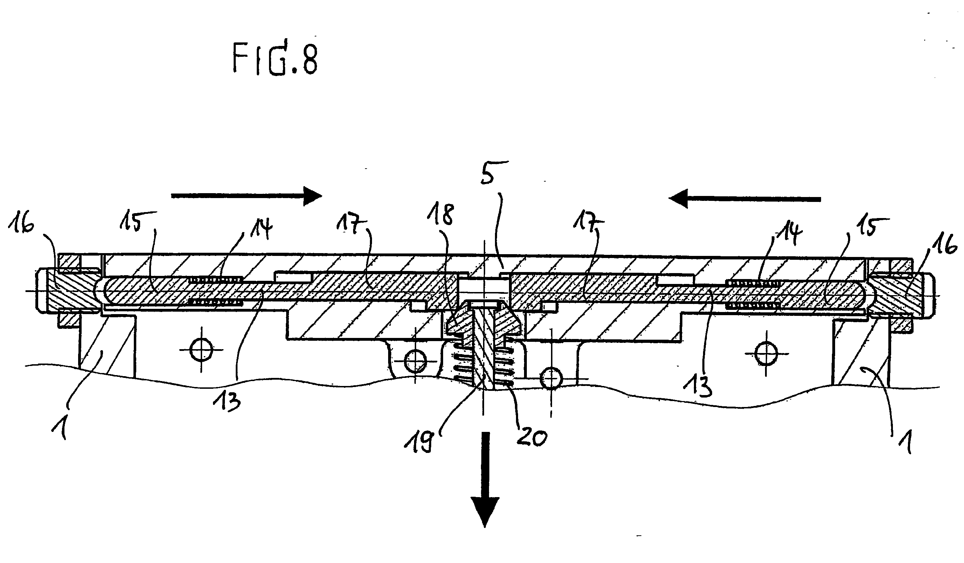

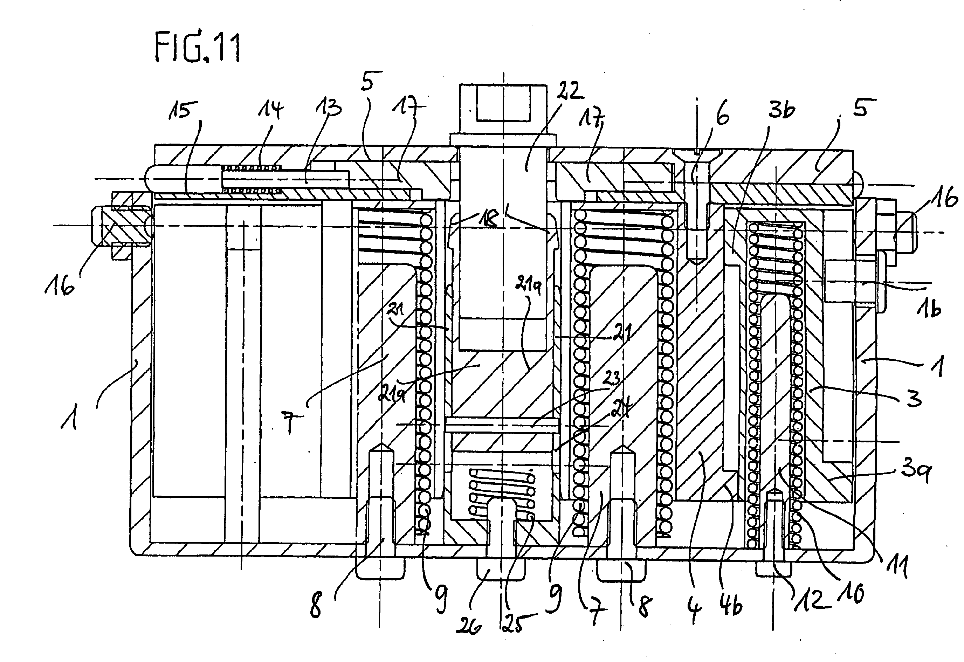

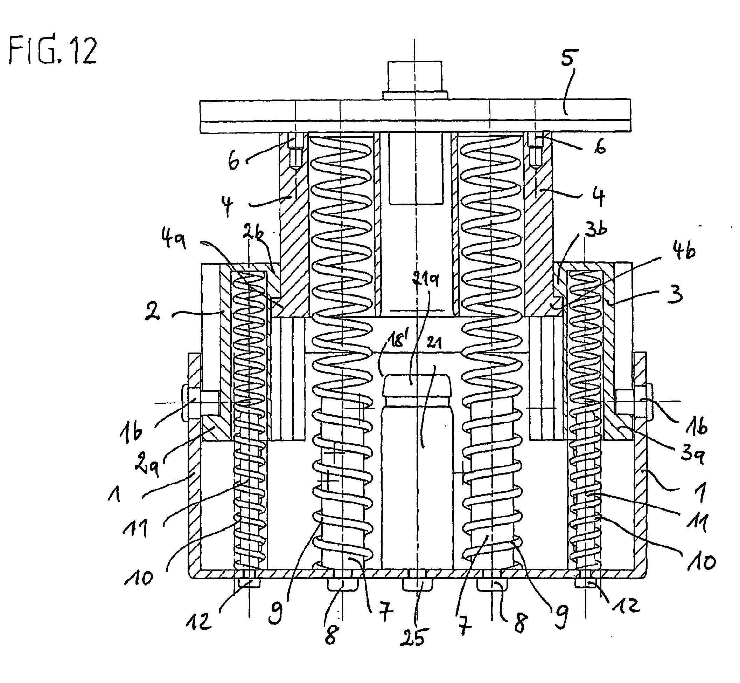

Wird nunmehr gemäß Fig. 8 das kegelstumpfartige Auslöseelement über die Stange 19 in Pfeilrichtung nach unten gezogen, z.B. mittels eines sensorgesteuerten Auslösemagneten, der im aktivierten Zustand die Stange 19 einzieht, dann können Schieber 17, Verriegelungsstangen 13 und die Rastbolzen 15 in Pfeilrichtung nach innen ausweichen. Die Rastbolzen 15 werden dann alleinig noch durch die Vorspannung der kleinen Druckfedern 14 in den beiden Kugelpfannen gehalten. Da jedoch die Aufstellkräfte der Aufstellfedern 9, 10 wesentlich größer sind als die Bolzenhaltekräfte, werden die Rastbolzen 15 aufgrund der Aufstellkraft der Aufstellfedern 9, 10 aus den Kugelpfannen 16 ausgestoßen (Kugelschnäpper-Prinzip) und die Aufstellplatte 5 kann dann gemäß den Figuren 11 und 12 unter Zurückfedern der Rastbolzen 15 ausfahren, wobei Fig. 11 den Beginn der Aufstellbewegung und Fig. 12 den vollständig aufgestellten Zustand zeigt.

Bei den Ausführungsformen nach den Figuren 4 B, 7 und 8 ist ein massives, jedoch durchbohrtes kegelstumpfartiges Stützelement 18 vorgesehen. Prinzipiell kann das Stützelement auch durchgehend im wesentlichen zylindrisch ausgebildet sein, wobei eine leichte Konizität von bis zu ca. 8° positive Wirkungen in Bezug auf die erforderliche Lösekraft durch die Reduzierung der Reibung hat. Auch muß das Stützelement nicht zwingend aus der Abstützlage zwischen den beiden Schiebern 17 nach unten herausgezogen werden. Es kann auch von dem jeweilig vorgesehenen Aktuator aus der Abstützlage nach unten gestoßen werden, indem der entsprechende Aktuator einen Stift ausstößt.

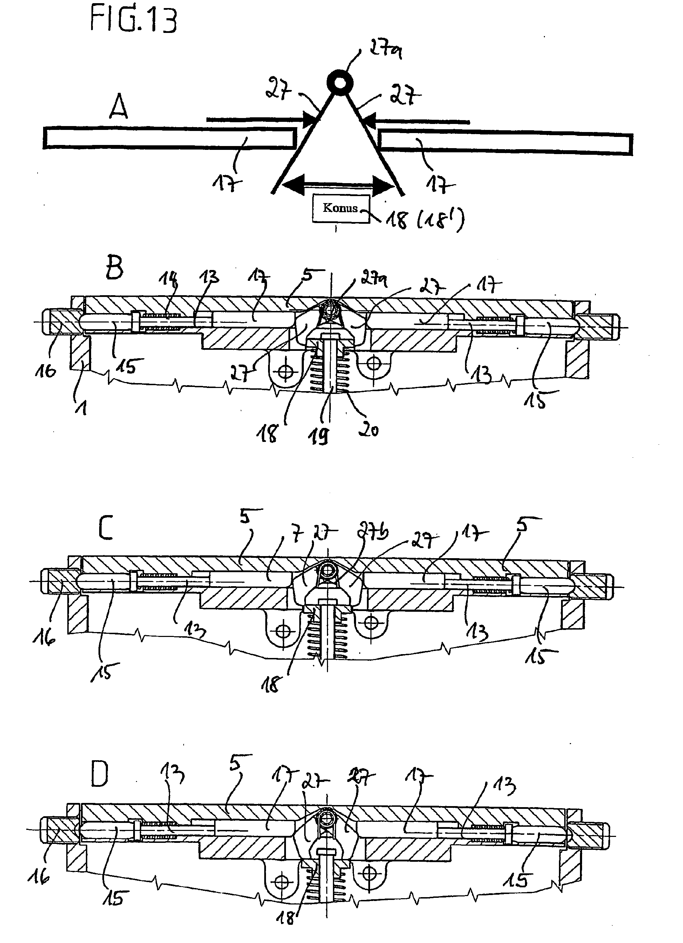

Bei den Ausführungsbeispielen nach den Figuren 1 bis 12 wirkt das Stützelement 18 über die Schieber 17 und die Verriegelungsstangen 13 direkt auf die Rastbolzen 15. Die Figuren 13-15 zeigen dabei Ausführungsformen, bei denen das Stützelement über ein Hebelsystem indirekt auf die Rastbolzen wirkt, wie noch erläutert werden wird. Bei der ersten Gruppe der Ausführungsbeispiele kommen insbesondere zylindrische oder konische Abstützflächen zur Anwendung, wogegen bei der indirekten Einwirkung vorzugsweise leicht konische Abstützflächen in Frage kommen.

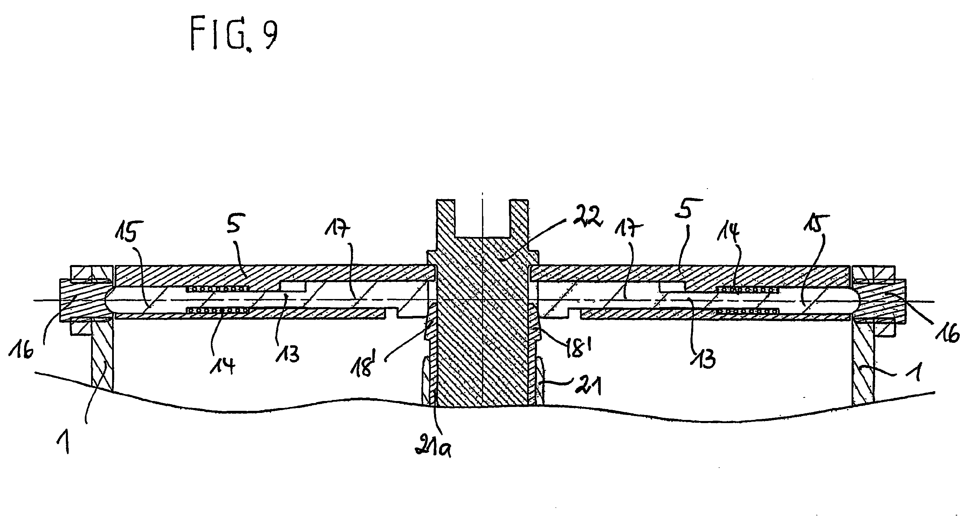

In den Figuren 1, 2 und 3 mit der Ausschnitt-Darstellung in Fig. 4, Figurenteil A ist der Aufbau eines Stütz- und Auslösesystems mit einem pyrotechnischen Aktuator dargestellt, wobei die Figuren 9 - 12 die zugehörigen Abläufe beim Aufstellen zeigen.

Wie insbesondere die Fig. 1 in Verbindung mit Fig. 4 A zeigt, ist in einem mittigen, zylindrischen Innengehäuse 21 des Gehäuses 1 ein Kolben 21a verschiebbar angeordnet, der am oberen Bereich als Hohlkolben ausgebildet ist. Der obere Rand des Hohlkolben-Bereiches besitzt außen eine ringförmige, konische Abstützfläche 18' zur Abstützung der Rastbolzen 15, wie insbesondere die Fig. 9 zeigt. In dem zylindrischen Raum des Innengehäuses 21 ist ein pyrotechnischer Auslöser 22, der in den Hohlkolben-Bereich hineinragt, angebracht, der im Beispiel gasausstoßend ausgebildet ist. Er kann jedoch auch kolbenausstoßend ausgebildet sein.

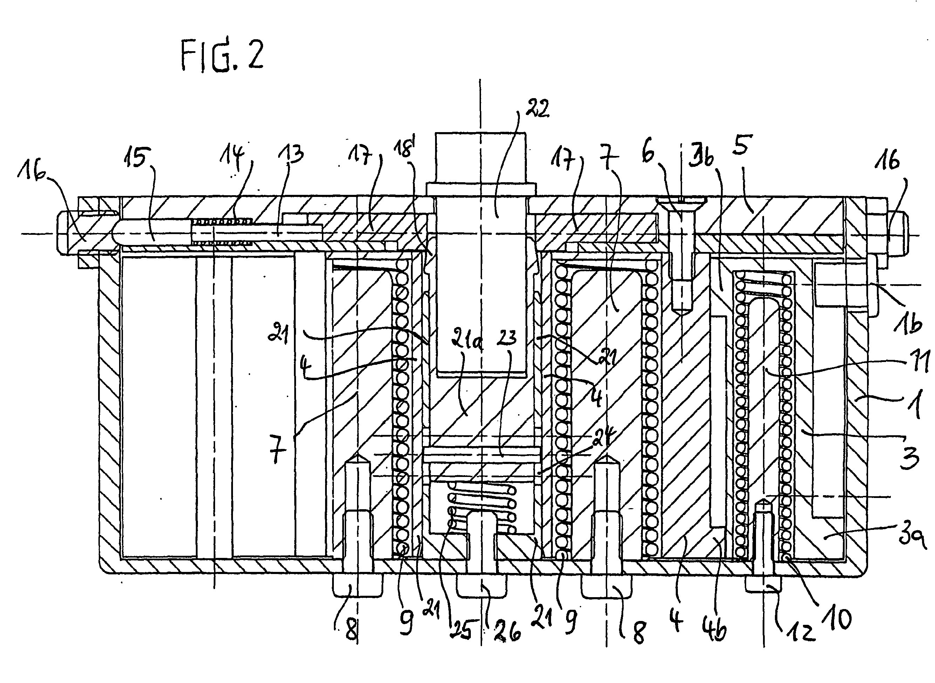

Der Kolben 21a ist mittels eines Stiftes 23 (Fig. 2) in der Wandung des mittigen zylindrischen Innengehäuses 21 geführt aufgenommen, jedoch nur für einen begrenzten Aufstellhub 24 (Fig. 2). Eine Feder 25 in Verbindung mit dem Anschlag 26 bewirken einen gedämpften Anschlag des Kolbens nach einer Auslösung, wobei die Feder 25 den Kolben dann wieder in die Ausgangslage zurückdrückt.

Im Grundzustand (Fig. 9) liegen die Schieber 17 an der konischen Stützfläche 18 an, die verhindert, dass die Rastbolzen 15 sich nach innen schieben können, wie im Fall der Ausführung nach Fig. 7.

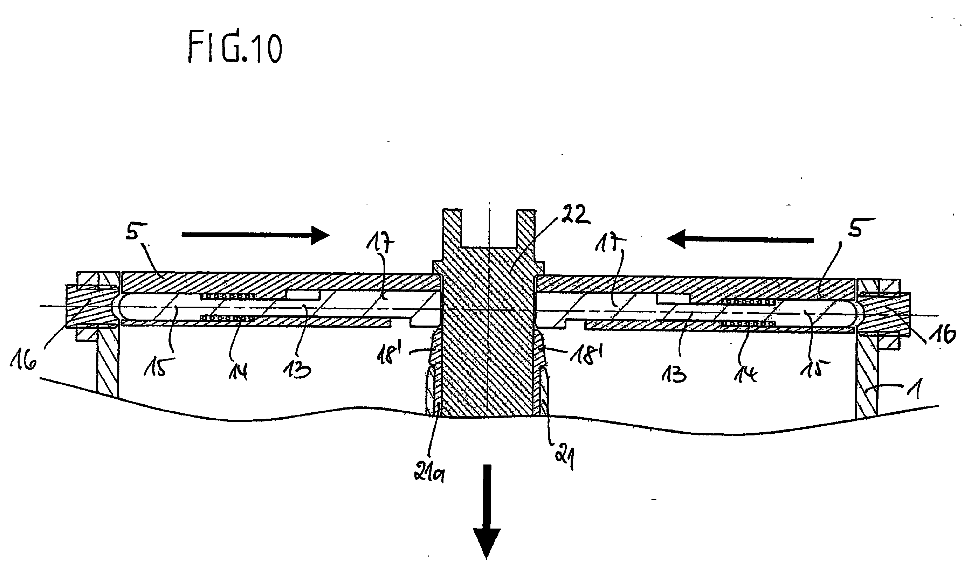

Wird der Treibsatz des pyrotechnischen Auslösers 22 gezündet, dann baut sich im Hohlkolben-Bereich des Kolbens 21 a ein Gasdruck auf, der den Kolben und damit auch die an ihm oben angeformte konische Stützfläche 18' nach unten drückt. Dadurch entfällt, wie die Fig. 10 und auch die Fig. 11 zeigt, die Abstützung der Rastbolzen 15, die, wie zur Fig. 8 erläutert, aus der zugehörigen Kugelpfanne unter Aufstellung der Aufstellplatte 5 ausgestoßen werden.

In den bisherigen Ausführungsbeispielen wurde eine direkte Abstützung der Bolzen-Enden an dem zentralen Abstützelement 18 beschrieben.

Um die Lösekräfte am zentralen Abstützelement gering zu halten, was insbesondere beim Einsatz eines elektromagnetischen Auslösers (Auslösemagnet) von zentraler Wichtigkeit ist, ist gemäß den Figuren 13, 14 und 15 eine indirekte Abstützung vorgesehen. Bei dieser indirekten Abstützung ist ein die Andruckkräfte der Bolzenenden an das zentrale Stützelement untersetzendes Zwischenglied zwischen das zentrale Abstützelement 18' und die Bolzen-, d.h. Schieberenden, geschaltet.

Das Zwischenglied kann z.B. gemäß Fig. 13 durch zwei spiegelbildlich nach Art einer Zange um eine Achse 27a drehbeweglich angeordnete Hebel 27 gebildet sein, die durch eine Feder 27b in Schließrichtung vorgespannt sind. Wie dabei der Figurenteil A, die Prinzip-Darstellung zeigt, werden die Auslösekräfte aufgrund der Hebelverhältnisse (je nach Bauraum) am zentralen Auslöseelement (Konus) minimiert. Wie dabei der Figurenteil B zeigt, liegen im Grundzustand die Zangenenden an einem Ringbund des zentralen Stützelementes 18 an. Die beiden Hebel 27 können damit durch die Schieber 17 nicht zusammengedrückt werden.

Wird nun das Stützelement 18 nach unten weggezogen, gleiten die Zangenenden 27 über den Ringbund hinweg und können dann aufgrund der Aufstellkräfte der Federn 9, 10 zusammengedrückt werden. Der Figurenteil C zeigt dabei den Beginn der Freigabe der Zange, und der Figurenteil D zeigt die endgültige Freigabe, so dass die Aufstellplatte 5 ausfahren kann.

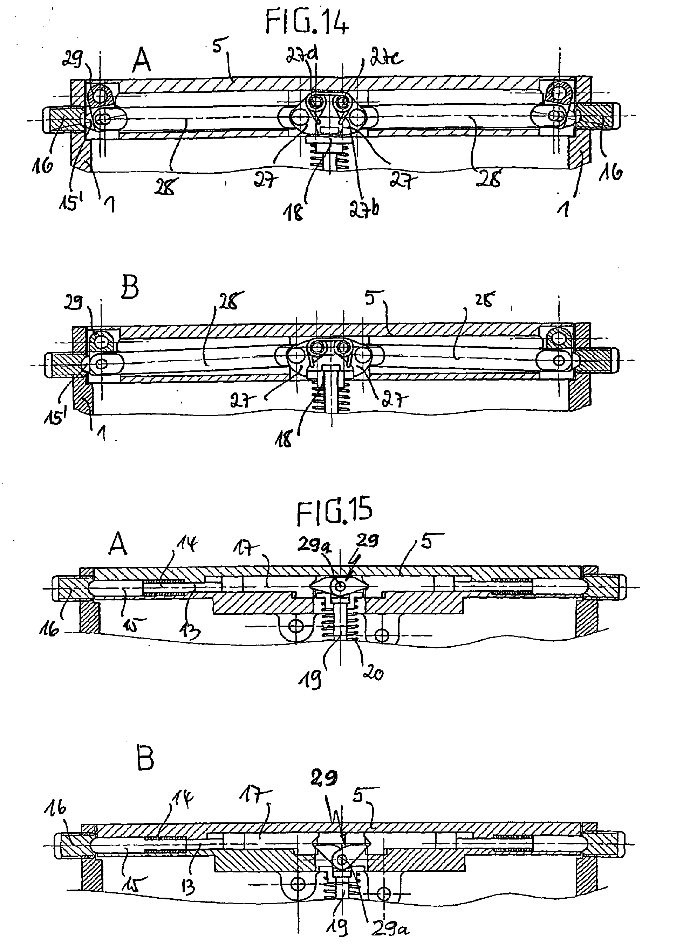

Eine Variante der Verriegelung mit einem zangenförmigen Zwischenglied zur Kraftuntersetzung zeigt.die Fig. 14, und zwar im Figurenteil B die verriegelte Grundstellung und im Figurenteil A die entriegelte Stellung. Jeder Zangenhebel ist dabei einzeln drehbar gelagert (Achsen 27 c, d). Abweichend von den bisherigen Ausführungsformen ist keine indirekte Kräftekette, vorgespannter Rastbolzen 15, Verriegelungsstange 13 und Schieber 17, vorgesehen, sondern die Zange hat eine Direktanbindung zum Rastbolzen. Dazu ist an jedem Hebelarm 27 der Zange eine Betätigungsstange 28 drehbeweglich angelenkt, die am anderen Ende an einem kleinen Hebel 29 angelenkt ist, der eine Halbkugel 15' für eine Verrastung mit der Kugelpfanne 16 aufweist.

Solange der Ringbund des Stützelementes 18 von den Enden der Zangenhebel 27 umfaßt ist (Figurenteil B), solange sind die Halbkugel-Fortsätze 15' an den Hebeln 29 im Reib- und Formschluß mit der jeweiligen Kugelpfanne 16. Wird das Stützelement jedoch weggezogen (Figurenteil A), kommen die Halbkugeln 15' außer Wirkeingriff, d.h. die Verriegelung ist aufgehoben und die Aufstellplatte kann ausfahren.

Die Fig. 15 schließlich zeigt eine Kraftuntersetzung mit einem Kniehebel 29, der zugleich anstelle eines Konus als Stützelement dient. Dazu stehen die Hebelenden in Wirkeingriff mit den Schiebern 17.
An dem Drehpunkt 29 a des Kniehebels ist die Betätigungsstange 19 angelenkt. Ist der Kniehebel 29 gespannt (Figurenteil A), dann stehen die beiden Hebel in einer Linie in Richtung der von den Schiebern 17 ausgehenden Kräfte, d.h. diese sind durch den Kniehebel 29 abgestützt. Die Aufstellplatte 5 ist sicher verriegelt.

Wird die Stange 19 nach unten gezogen, dann springt der Kniehebel in den ungespannten Zustand (Figurenteil B), d.h. die Hebel falten sich zusammen und geben Raum für ein Ausweichen der Rastbolzen. Die Aufstellplatte wird entriegelt.

Bei Sicherheitsauslösungen im Fahrbetrieb oder bei Auslösungen zu Test- bzw. Inspektionszwecken, muß das Aufstellsystem wieder in die Grundstellung gebracht, d.h. reversiert, werden.

Dazu wird manuell, z.B. unter Zuhilfenahme der Motorhaube nach den Prinzipien der DE 101 11 096 A1, eine Kraft von oben auf die Aufstellplatte 5 aufgebracht und diese unter Vorspannen der Aufstellfedern 9, 10 zum Gehäuse-Unterteil bewegt.

Die federbelasteten Rastbolzen 15 kommen vor den Kugelpfannen 16 zur Anlage. Weil aber die Reversierkraft wesentlich größer ist als die Kraft der Bolzendruckfedern 14, werden die Rastbolzen bei weiterem Druck auf die Aufstellplatte entgegen der Vorspannung der kleinen Druckfedern 14 zurückgedrückt und rasten dann nachfolgend in den Kugelpfannen 16 ein. Damit ist die erste Stufe der Reversierung erreicht.

Unmittelbar nach dieser ersten Verriegelungsphase wird das zentrale Stützelement zwischen die zentral aus der Lagerung herausstehenden Enden der Bolzen befördert und stellt durch diese Abstützung sicher, dass die Bolzenköpfe 15 eine sichere Verbindung zu den Gegenständen 16 eingehen.

Das Aufstellsystem befindet sich somit wieder in der Grundstellung.

## Patentansprüche

1. Vorrichtung zum Schutz von Personen bei einem Frontalaufprall auf ein Kraftfahrzeug, welches eine den Vorderwagen abdeckende Fronthaube aufweist, die windschutzscheibenseitig an beiden Fahrzeugseiten jeweils über eine Scharnieranordnung drehbeweglich an der Karosse des Vorderwagens angelenkt ist, bestehend jeweils aus
- einem Scharnierträger für die mittelbare karosserieseitige Anlenkung der Scharnieranordnung, der aufstellbar an der Karosse des Vorderwagens angebracht ist,
- einer an dem Scharnierträger angreifenden Federspeicher-Anordnung, und einer
- sensorgesteuerten Verriegelungseinrichtung für einen Wirkeingriff mit dem Scharnierträger, derart, dass im Normalzustand der Scharnierträger niedergehalten ist und im Kollisionsfall sensorbetätigt für eine begrenzte Aufstellbewegung freigebbar ist,
**dadurch gekennzeichnet, dass** die Verriegelungseinrichtung an zwei symmetrisch gegenüberliegenden Seiten des Scharnierträgers (5) mindestens ein fingerartiges Rastelement (15) für eine Rastverbindung mit einem fahrzeugfesten Rastsitz (16) sowie ein zentrales Abstützelement (18) für eine lösbare Abstützung der beiden gegenüberliegenden fingerartigen Rastelementen (15) besitzt.

2. Vorrichtung nach Anspruch 1, **dadurch gekennzeichnet, dass** das fingerartige Rastelement als Rastbolzen (15) ausgebildet ist und die Rastsitze (16) eine kugelige Konfiguration haben.

3. Vorrichtung nach Anspruch 1, **dadurch gekennzeichnet, dass** das Rastelement und die Rastsitze eine kegelige Konfiguration haben.

4. Vorrichtung nach einem der Ansprüche 1 bis 3, **dadurch gekennzeichnet, dass** das Abstützelement linear beweglich angeordnet ist und eine im wesentlichen zylindrische Abstützfläche (18) aufweist, die optional auch eine leichte Konizität im Bereich bis zu ca. 8° aufweisen kann.

5. Vorrichtung nach einem der Ansprüche 1 bis 3, **dadurch gekennzeichnet, dass** das Abstützelement durch ein zangenartiges Zwischenglied (27) gebildet ist.

6. Vorrichtung nach einem der Ansprüche 1 bis 3, **dadurch gekennzeichnet, dass** das Abstützelement durch einen Kniehebel (28) gebildet ist.

7. Vorrichtung nach einem der Ansprüche 1 bis 6, **dadurch gekennzeichnet, dass** die Rastbolzen (15) vorgespannt durch eine Druckfeder (14) auf einer Verriegelungsstange (13) angeordnet sind, die direkt oder indirekt über Schieberelemente (17), mit dem zentralen Abstützelement in Wirkverbindung stehen derart, dass beim Lösen der Abstützung durch die Bewegung des Abstützelementes die Verriegelungsstangen mit den Rastbolzen unter Aufhebung der Rastverbindung aufgrund der Aufstellkraft der Federspeicheranordnung (9, 10) zum Zentrum hin ausweichen können.

8. Vorrichtung nach Anspruch 5, **dadurch gekennzeichnet, dass** die Zangen (27) des Zwischengliedes über angelenkte Verbindungsstangen in direkter Wirkanbindung mit den Rastbolzen (15') stehen.

9. Vorrichtung nach Anspruch 4 und/oder 7, **dadurch gekennzeichnet, dass** das Abstützelement durch einen kegelstumpfartigen Körper (18), mit einem zylindrischen Abstützbund, der eine zentrische Bohrung zur Aufnahme eines Auslöse-Zugstabes (19) aufweist, gebildet ist.

10. Vorrichtung nach Anspruch 9, **dadurch gekennzeichnet, dass** der kegelstumpfartige Körper schwimmend gelagert ist.

11. Vorrichtung nach Anspruch 4 und/oder 7, **dadurch gekennzeichnet, dass** das Abstützelement durch eine konusförmige Ringfläche (18') an einem Kolben (21 a) eines pyrotechnischen Aktuators gebildet ist.

12. Vorrichtung nach einem der Ansprüche 1 bis 11, **dadurch gekennzeichnet, dass** an jeder Seite des Scharnierträgers zwei Rastbolzen (15) und zwei zugehörige Rastsitze (16) vorgesehen sind.

13. Vorrichtung nach einem der Ansprüche 1 bis 12, **dadurch gekennzeichnet, dass** eine rechteckige Aufstellplatte (5) als Scharnierträger oder zur Aufnahme des Scharnierträgers vorgesehen ist, die im Normalzustand die obere Abdeckplatte eines rechteckigen Gehäuses (1) bildet, das fahrzeugfest angebracht ist und die Federspeicher-Anordnung (9,10) aufnimmt, und dass die Rastbolzen (15), sich längsseitig erstreckend mit dem zentralen Abstützelement im Zentrum, an der Aufstellplatte (5) und die Rastsitze (16) für die Rastverbindung an den Schmalseiten des Gehäuses (1) angebracht sind.

14. Vorrichtung nach Anspruch 13, **dadurch gekennzeichnet, dass** die Rastsitze (16) in ihrer Tiefe einstellbar angebracht sind.

## Claims

1. Device for protecting persons in the case of a frontal impact with a motor vehicle that has a bonnet covering the front section, which bonnet is pivotally coupled to the bodywork of the front section at the windscreen end on both sides of the vehicle by means of a respective hinge arrangement, consisting in each case of
- a hinge carrier for indirect coupling of the hinge arrangement on the bodywork side, which hinge carrier is deployably mounted on the bodywork of the front section,
- a spring actuator arrangement which acts on the hinge carrier, and a
- sensor-controlled locking device for operative engagement with the hinge carrier in such a manner that, in the normal state, the hinge carrier is held down and, in the event of a collision, is releasable by sensor actuation for a limited deployment movement,
**characterised in that** the locking device has on two symmetrically opposite sides of the hinge carrier (5) at least one finger-like detent element (15) for a detent connection with a detent seat (16) fixed to the vehicle, and has a central support element (18) for releasably supporting the two opposite finger-like detent elements (15).

2. Device according to claim 1, **characterised in that** the finger-like detent element is in the form of a detent pin (15) and the detent seats (16) have a spherical configuration.

3. Device according to claim 1, **characterised in that** the detent element and the detent seats have a conical configuration.

4. Device according to any one of claims 1 to 3, **characterised in that** the support element is arranged to be linearly movable and has a substantially cylindrical support surface (18) which may optionally also have a slight conicity in the range of up to approximately 8°.

5. Device according to any one of claims 1 to 3, **characterised in that** the support element is formed by a pincer-like intermediate member (27).

6. Device according to any one of claims 1 to 3, **characterised in that** the support element is formed by a toggle lever (28).

7. Device according to any one of claims 1 to 6, **characterised in that** the detent pins (15) are arranged, biased by a compression spring (14), on a locking bar (13) which are in operative connection, directly or indirectly via sliding rod elements (17), with the central support element in such a manner that, on release of the support by movement of the support element, the locking bars together with the detent pins are able to move toward the centre, with the detent connection being released owing to the deployment force of the spring actuator arrangement (9, 10).

8. Device according to claim 5, **characterised in that** the pincers (27) of the intermediate member are in direct operative connection with the detent pins (15') via articulated connecting bars.

9. Device according to claim 4 and/or 7, **characterised in that** the support element is formed by a frusto-conical body (18), with a cylindrical support collar having a central bore for receiving a release pull-rod (19).

10. Device according to claim 9, **characterised in that** the frusto-conical body is floatingly mounted.

11. Device according to claim 4 and/or 7, **characterised in that** the support element is formed by a conical ring surface (18') on a piston (21 a) of a pyrotechnic actuator.

12. Device according to any one of claims 1 to 11, **characterised in that** two detent pins (15) and two associated detent seats (16) are provided on each side of the hinge carrier.

13. Device according to any one of claims 1 to 12, **characterised in that** a rectangular deployment plate (5) is provided as the hinge carrier or for receiving the hinge carrier, which, in the normal state, forms the top cover of a rectangular housing (1) that is fixedly provided on the vehicle and that receives the spring actuator arrangement (9, 10), and the detent pins (15), extending longitudinally with the central support element in the centre, are provided on the deployment plate (5), and the detent seats (16) for the detent connection are provided on the short sides of the housing (1).

14. Device according to claim 13, **characterised in that** the detent seats (16) are mounted so as to be adjustable in their depth.

## Revendications

1. Dispositif de protection de personnes en cas de choc frontal avec un véhicule, lequel dispositif comporte un capot frontal recouvrant la partie avant du véhicule, ledit capot étant articulé côté pare-brise des deux côtés respectifs du véhicule par un dispositif à charnière de manière à pouvoir tourner au niveau de la carrosserie de la partie avant du véhicule, se composant respectivement
- d'un support de charnière pour l'articulation indirecte côté carrosserie du dispositif à charnière, ledit support étant disposé de manière à pouvoir être relevé au niveau de la carrosserie de la partie avant du véhicule,
- d'un dispositif d'accumulateur à ressort attaquant le support de charnière, et d'un
- dispositif de verrouillage commandé par capteur pour un engrènement actif avec le support de charnière de façon que, à l'état normal, le support de charnière est maintenu en position basse et, en cas de collision, il peut être libéré par commande de capteur en vue d'un mouvement limité de relèvement,
**caractérisé en ce que** le dispositif de verrouillage possède, au niveau des deux côtés symétriquement opposés du support de charnière (5), au moins un élément d'encliquetage semblable à un doigt (15) pour une liaison par encliquetage avec un logement d'encliquetage fixé sur le véhicule (16), ainsi qu'un élément central d'appui (18) pour un appui amovible des deux éléments d'encliquetage (15) opposés semblables à des doigts.

2. Dispositif selon la revendication 1, **caractérisé en ce que** l'élément d'encliquetage semblable à un doigt est conçu comme cheville d'encliquetage (15) et les logements d'encliquetage (16) ont une configuration sphérique.

3. Dispositif selon la revendication 1, **caractérisé en ce que** l'élément d'encliquetage et les logements d'encliquetage ont une configuration conique.

4. Dispositif selon l'une quelconque des revendications 1 à 3, **caractérisé en ce que** l'élément d'appui est disposé de manière à pouvoir se déplacer linéairement et comporte une surface d'appui (18) essentiellement cylindrique, laquelle peut également comporter en option une légère conicité dans une plage pouvant aller jusqu'à environ 8 degrés.

5. Dispositif selon l'une quelconque des revendications 1 à 3, **caractérisé en ce que** l'élément d'appui est formé par un organe intermédiaire (27) en forme de pince.

6. Dispositif selon l'une quelconque des revendications 1 à 3, **caractérisé en ce que** l'élément d'appui est formé par un levier à genouillère (28).

7. Dispositif selon l'une quelconque des revendications 1 à 6, **caractérisé en ce que** les chevilles d'encliquetage (15), précontraintes par un ressort de pression (14), sont disposées sur une tige de verrouillage (13), lesquelles sont en liaison active directe ou indirecte avec l'élément central d'appui par le biais d'éléments coulissants (17), de sorte que, lors du relâchement de l'appui par le mouvement de l'élément d'appui, les tiges de verrouillage avec les chevilles d'encliquetage peuvent dévier en direction du centre par suppression de la liaison par encliquetage en raison de la force de relèvement du dispositif d'accumulateur à ressort (9, 10).

8. Dispositif selon la revendication 5, **caractérisé en ce que** les pinces (27) de l'élément intermédiaire sont en liaison active directe avec les chevilles d'encliquetage (15') par le biais des tiges de liaison articulées.

9. Dispositif selon la revendication 4 et/ou 7, **caractérisé en ce que** l'élément d'appui est formé par un corps en forme de cône tronqué (18), avec un collet d'appui cylindrique, lequel comporte un alésage central pour recevoir une tige de traction (19) de déclenchement.

10. Dispositif selon la revendication 9, **caractérisé en ce que** le corps en forme de cône tronqué est logé de manière flottante.

11. Dispositif selon la revendication 4 et/ou 7, **caractérisé en ce que** l'élément d'appui est formé par une surface annulaire en forme de cône (18') au niveau d'un piston (21a) d'un actionneur pyrotechnique.

12. Dispositif selon l'une quelconque des revendications 1 à 11, **caractérisé en ce que**, de chaque côté du support de charnière, sont prévus deux chevilles d'encliquetage (15) et deux logements d'encliquetage (16) correspondants.

13. Dispositif selon l'une quelconque des revendications 1 à 12, **caractérisé en ce qu'**une plaque rectangulaire (5) de relèvement est prévue comme support de charnière ou pour recevoir le support de charnière, laquelle à l'état normal forme la plaque supérieure de recouvrement d'un boîtier rectangulaire (1) qui est fixé au véhicule et qui reçoit le dispositif d'accumulateur à ressort (9, 10), et **en ce que** les chevilles d'encliquetage (15) s'étendant côté longitudinal avec l'élément d'appui central au centre, sont placées au niveau de la plaque de relèvement (5), et les logements d'encliquetage (16) pour la liaison par encliquetage sont disposés au niveau des côtés étroits du boîtier (1).

14. Dispositif selon la revendication 13, **caractérisé en ce que** les logements d'encliquetage (16) sont réglables en profondeur.
